# EUROPEAN PATENT APPLICATION

(11) **EP 3 451 036 A1**
(43) Date of publication of application: **06.03.2019**
(21) Application number: 18191300.5
(22) Date of filing: 28.08.2018
(51) Int. Cl.: G02B 6/44

(54) **AERIAL DROP OPTICAL WAVEGUIDE CABLE**

(30) Priority: 28.08.2017 IN 201721030305
(71) Applicant: Sterlite Technologies Limited, 431 136 Maharashtra (IN)
(72) Inventor: KUMAR, Sravan, 431136 Maharashtra (IN); SAHOO, Kishore, 431136 Maharashtra (IN); MOTURU, Pavan, 431136 Maharashtra (IN); MISHRA, Atul, 431136 Maharashtra (IN); SHUKLA, Viskah, 431136 Maharashtra (IN); TENZING, Kangabam, 431136 Maharashtra (IN)
(74) Representative: Browne, Robin Forsythe

(57) **Abstract**

The present disclosure provides an optical waveguide cable (100). The optical waveguide cable (100) is defined by a longitudinal axis (107) passing through a geometrical center (113) of the optical waveguide cable (100). The optical waveguide cable (100) includes one or more cylindrical enclosures (123). Each of the one or more cylindrical enclosures (123) includes a plurality of optical waveguide (133). The optical waveguide cable (100) includes a first layer (153) surrounding the one or more cylindrical enclosures (123). The optical waveguide cable (100) includes a jacket layer (173) surrounding the first layer (153). The optical waveguide cable (100) includes a plurality of robust components (183). The plurality of robust components (183) is embedded in the jacket layer (173). Each robust component of the plurality of robust components (183) is a brass coated steel wire.

## Description

### TECHNICAL FIELD

The present disclosure relates to the field of optical waveguide cable. More particularly, the present disclosure relates to an aerial drop optical waveguide cable with predefined breaking load.

### BACKGROUND

Over the last few years, there has been an exponential growth in waveguide to the subscriber applications due to an increase in demand for high speeds and bandwidth. The waveguide to the subscriber applications requires a broadband optical waveguide distribution network. The optical waveguide distribution network includes optical waveguide distribution cables. Traditionally, aerial drop cables are desirable for use in the waveguide to the subscriber applications. These aerial drop cables form an external link between a distribution cable and the subscriber. These aerial drop cables are used for aerial installation and clamped on poles. Typically, these aerial drop cables include a number of cylindrical enclosures inside a core of the optical waveguide cable, water swellable yarns and an outer jacket. In addition, these aerial drop cables include embedded robust components embedded inside the outer jacket. The embedded robust components may be made of brass coated steel wire.

The presently available aerial drop cables have several drawbacks. The aerial drop cables exert force on the poles on which the cables are clamped whenever any external load is applied on the cable. This leads to poles being broken and damaged which increases the maintenance cost. In addition, the prior art aerial drop cables do not allow easy access to waveguides. Further, the prior art aerial drop cables are not round in shape which does not allow the cables to be easily installed in ducts. The aerial drop cables cannot be blown or pulled easily inside the duct to a non-round shape.

In light of the above stated discussion, there is a need for an aerial drop optical waveguide cable which overcomes the disadvantages of the prior art aerial drop cables.

### SUMMARY

According to an aspect of the invention there is provided an optical waveguide cable comprising a jacket layer; and a plurality of robust components embedded in the jacket layer, wherein the plurality of robust components are brass coated steel wires, wherein the plurality of robust components and the jacket layer elongate simultaneously along the length of the optical waveguide cable on application of force until the optical waveguide cable reaches to a predefined breaking load.

The breaking load may be in a range of about 1350 Newton to about 1800 Newton.

The optical waveguide cable may have a cable bend radius. A minimum cable bend radius may be about 12D. The optical waveguide cable may have a crush resistance of about 2000 Newton per 10000 square millimetres.

The optical waveguide cable may have an impact strength of about 10 Newton meters.

The optical waveguide cable may have a torsion angle of about ± 180°.

The optical waveguide cable may have a span length in a range of about 55 meters to about 68 meters at sag of at most 1.8%.

The plurality of robust components may comprise two bundles of robust components. Each bundle of the two bundles may comprise three longitudinal robust components or three stranded robust components. The three longitudinal robust components may be twisted together.

The plurality of robust components and the jacket layer may elongate under vertical load as the optical waveguide cable is hanged between two poles.

The plurality of robust components may comprise two bundles of robust components. Each of the two bundles of robust components may have a third diameter. The third diameter may lie in a range of about 0.65 millimeter to 0.75 millimeter. The third diameter may be an overall diameter of each bundle of the two bundles of robust components.

The optical waveguide cable may comprise one or more cylindrical enclosures. The one or more cylindrical enclosures may be made of a material selected from a group consisting of low smoke zero halogen and thermoplastic elastomer. The one or more cylindrical enclosures may be filled with a gel. Alternatively, the one or more cylindrical enclosures may be dry.

The optical waveguide cable may comprise one or more cylindrical enclosures positioned substantially along a longitudinal axis of the optical waveguide cable. Each of the one or more cylindrical enclosures may be positioned in a core region of the optical waveguide cable. Each of the one or more cylindrical enclosures may comprise a plurality of optical waveguides. The one or more cylindrical enclosures may have a first diameter in a range of about 1.1 millimeters + 0.05 millimeters. The one or more cylindrical enclosures may have a second diameter in a range of about 1.3 millimeters + 0.05 millimeters.

The optical waveguide cable may comprise a fluid absorbing element positioned around the one or more cylindrical enclosures. The fluid absorbing element may be positioned in the core region of the optical waveguide cable. The fluid absorbing element may be a filler.

A first layer may surround a core region of the optical waveguide cable. The first layer may be a fluid barring layer. The first layer may have a first thickness in a range of about 0.15 millimeters ± 0.05 millimeters.

The jacket layer may concentrically surround the first layer so that the jacket layer is in continuous contact with the first layer.

The jacket layer may have a second thickness in a range of about 1.4 millimeters ± 0.1 millimeters.

The optical waveguide cable may have a fourth diameter in a range of about 7.0 ± 0.1 millimeters.

The optical waveguide cable may have a cable weight in a range of about 38 + 10% kilogram per kilometers.

The optical waveguide cable may have a waveguide strain at stringing tension of at most 0.050%. The waveguide strain at stringing tension of the optical waveguide cable may be subjected to maximum environmental load which is at most 0.667%. The optical waveguide cable may have a waveguide strain at stringing tension after unloading of at most 0.050%.

The optical waveguide cable may comprise two equally spaced axial stripes over a circumference of the jacket layer. Each of the two equally spaced axial stripes may be 1.25 ± 0.25 millimeters wide. Each of the two equally spaced axial stripes may be positioned at 90° to the plurality of robust components.

The optical waveguide cable may have an elastic limit of at least 1200 Newton.

The optical waveguide cable may comprise a plurality of ripcords positioned substantially below the jacket layer.

Each of the plurality of robust components may be coated with ethylene acrylic acid layer.

The optical waveguide cable may have tensile test results as per standards of IEC-60794-1-21-E1. The optical waveguide cable may have crush resistance test results as per standards of IEC-60794-1-21-E3. The optical waveguide cable may have impact strength test results as per standards of IEC-60794-1-21-E4. The optical waveguide cable may have torsion test results as per standards of IEC-60794-1-21-E7. The optical waveguide cable may have environmental performance test results as per standards of IEC-60794-1-22-F1. The optical waveguide cable may have cable bend test results as per standards of IEC-60794-1-21-E11. The optical waveguide cable may have water penetration test results as per standards of IEC-60794-1-22-F5.

According to an embodiment, the present disclosure provides an optical waveguide cable. The optical waveguide cable is defined by a longitudinal axis. The longitudinal axis passes through a geometrical center of the optical waveguide cable. The optical waveguide cable includes one or more cylindrical enclosures positioned substantially along the longitudinal axis of the optical waveguide cable. Each of the one or more cylindrical enclosures is positioned in a core region of the optical waveguide cable. In addition, the optical waveguide cable includes a first layer. The first layer surrounds the core region of the optical waveguide cable. Moreover, the optical waveguide cable includes a fluid absorbing element. The fluid absorbing element is positioned in the core region of the optical waveguide cable. Further, the optical waveguide cable includes a jacket layer. The jacket layer concentrically surrounds the first layer. The jacket layer is in continuous contact with the first layer. Furthermore, the optical waveguide cable includes a plurality of robust components. Also, the optical waveguide cable includes a plurality of ripcords. Each of the one or more cylindrical enclosures includes a plurality of optical waveguides. The one or more cylindrical enclosures are characterized by a first diameter and a second diameter. The first diameter is in a range of about 1.1 millimeters + 0.05 millimeters and the second diameter is in a range of about 1.3 millimeters + 0.05 millimeters. The one or more cylindrical enclosures are made of a material selected from a group. The group consists of low smoke zero halogen and thermoplastic elastomer. The first layer is a fluid barring layer. The first layer is characterized by a first thickness. The first thickness is in a range of about 0.15 millimeters ± 0.05 millimeters. The fluid absorbing element is characterized as a filler. The jacket layer is characterized by a second thickness. The second thickness is in a range of about 1.4 millimeters ± 0.1 millimeters. The plurality of robust components includes two bundles of robust components. Each of the two bundles of robust components includes three longitudinal robust components. The three longitudinal robust components are twisted together. Each of the plurality of robust components is embedded in the jacket layer. Each the plurality of robust components is a brass coated steel wire. The brass coated steel wire is coated with ethylene acrylic acid. Each of the two bundles of robust components is characterized by a third diameter. The third diameter lies in a range of about 0.65 millimeter to 0.75 millimeter. The third diameter is the overall diameter of each bundle of the two bundles of robust components. Two bundles of robust components are 180° apart from one another. The plurality of ripcords is positioned substantially below the jacket layer. The optical waveguide cable is characterized by a breaking load. The breaking load is in a range of 1350 Newton to 1800 Newton. The optical waveguide cable is characterized by a fourth diameter. The fourth diameter is in a range of about 7.0 + 0.1 millimeters. The optical waveguide cable is characterized by a cable weight. The cable weight is in a range of about 38 + 10% kilogram per kilometers. Waveguide strain at stringing tension of optical waveguide cable is at most 0.050%. The waveguide strain at stringing tension of optical waveguide cable is subjected to maximum environmental load is at most 0.667%. Waveguide strain at stringing tension of cable after unloading is at most 0.050%. Span length is 55 meters to 68 meters at optical waveguide cable sag of at most 1.8%.

According to yet another embodiment, the present disclosure provides an optical waveguide cable. The optical waveguide cable is defined by a longitudinal axis. The longitudinal axis passes through a geometrical center of the optical waveguide cable. The optical waveguide cable includes one or more cylindrical enclosures positioned substantially along the longitudinal axis of the optical waveguide cable. Each of the one or more cylindrical enclosures is positioned in a core region of the optical waveguide cable. In addition, the optical waveguide cable includes a first layer. The first layer surrounds the core region of the optical waveguide cable. Moreover, the optical waveguide cable includes a fluid absorbing element. The fluid absorbing element is positioned in the core region of the optical waveguide cable. Further, the optical waveguide cable includes a jacket layer. The jacket layer concentrically surrounds the first layer. The jacket layer is outermost layer of the optical waveguide cable. The jacket layer is in continuous contact with the first layer. Furthermore, the optical waveguide cable includes a plurality of robust components. Also, the optical waveguide cable includes a plurality of ripcords. Each of the one or more cylindrical enclosures includes a plurality of optical waveguides. The one or more cylindrical enclosures are characterized by a first diameter and a second diameter. The first diameter is in a range of about 1.1 millimeters + 0.05 millimeters and the second diameter is in a range of about 1.3 millimeters + 0.05 millimeters. The one or more cylindrical enclosures are made of a material selected from a group. The group consists of low smoke zero halogen and thermoplastic elastomer. The first layer is a fluid barring layer. The first layer is characterized by a first thickness. The first thickness is 0.15 millimeters ± 0.05 millimeters. The fluid absorbing element is characterized as filler. The jacket layer is characterized by a second thickness. The second thickness is in a range of about 1.4 millimeters ± 0.1 millimeters. The plurality of robust components includes two bundles of robust components. Each of the two bundles of robust components includes three longitudinal robust components. The three longitudinal robust components are twisted together. Each of the plurality of robust components is embedded in the jacket layer. Each robust component of the plurality of robust components is a brass coated steel wire. The brass coated steel wire is coated with ethylene acrylic acid. Each of the two bundles of robust components is characterized by a third diameter. The third diameter lies in a range of about 0.65 millimeter to 0.75 millimeter. The third diameter is a diameter of imaginary circles. Each of the imaginary circle houses one bundle of the two bundles of robust components. Two bundles of the robust components are 180° apart from one another. The plurality of ripcords is positioned substantially below the jacket layer. The optical waveguide cable is characterized by a breaking load. The breaking load is in a range of 1350 Newton to 1800 Newton. The optical waveguide cable is characterized by a fourth diameter. The fourth diameter is in a range of about 7.0 + 0.1 millimeters. The optical waveguide cable is characterized by a cable weight. The cable weight is in a range of about 38 + 10% kilogram per kilometers. Waveguide strain at stringing tension of optical waveguide cable is at most 0.050%. The waveguide strain at stringing tension of optical waveguide cable is subjected to maximum environmental load is at most 0.667%. Waveguide strain at stringing tension of cable after unloading is at most 0.050%. The Span length is 55 meters to 68 meters at optical waveguide cable sag of at most 1.8%. The optical waveguide cable is characterized by cable bend radius. The minimum cable bend radius is about 12D. The optical waveguide cable is characterized by crush resistance. The crush resistance is 2000 Newton per 10000 square millimeters. The optical waveguide cable is characterized by impact strength. The impact strength is 10 Newton meters. The optical waveguide cable is characterized by torsion angle. The torsion angle is ± 180°. The optical waveguide cable has an elastic limit of at least 1200 Newton.

### BRIEF DESCRIPTION OF DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

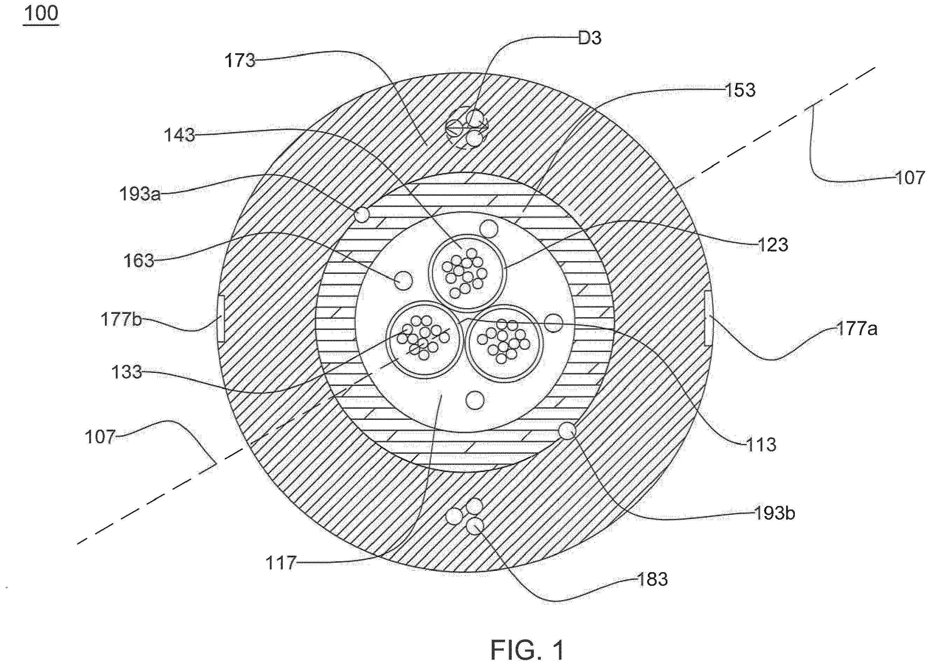

**FIG. 1** illustrates a cross sectional view of an optical waveguide cable, in accordance with an embodiment of the present disclosure.

It should be noted that the accompanying figures are intended to present illustrations of exemplary embodiments of the present disclosure. These figures are not intended to limit the scope of the present disclosure. It should also be noted that accompanying figures are not necessarily drawn to scale.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1** illustrates a cross sectional view of an optical waveguide cable **100**, in accordance with an embodiment of the present disclosure. In general, the optical waveguide cable **100** is a network cable that contains strands or array of glass waveguides inside an insulated casing. The glass waveguides are used to carry optical signals. The insulated casing facilitates to protect the waveguides from heat, cold, unwanted disturbances and external interference from other types of wiring. The insulated casing provides protection to the optical waveguide cable **100** from ultraviolet rays of sun. The optical waveguide cable **100** is designed for long distance transmission of optical signal. The optical waveguide cable **100** enables very high speed data transmission. The optical waveguide cable **100** transmits data at a higher speed than copper data cable. The optical waveguide cable **100** transmits data at much higher band width than copper data cable.

The optical waveguide cable **100** is a light weight optical waveguide cable **100**. In general, the light weight optical cables are employed for aerial and underground installations. The optical waveguide cable **100** is a self-supporting cable. The optical waveguide cable **100** is specially designed for easy and economical aerial and underground installation. The optical waveguide cable **100** is used for a wide variety of applications. The wide variety of applications includes high speed internet, data transmission, optical sensor, intercommunication, optical circuit installations and the like. The optical waveguide cable **100** is very less susceptible to interference.

The optical waveguide cable **100** is associated with a longitudinal axis **107**. The longitudinal axis **107** of the optical waveguide cable **100** passes through a geometrical center **113** of the cross section of the optical waveguide cable **100**. The longitudinal axis **107** is an imaginary axis. The longitudinal axis **107** extends along length of the optical waveguide cable **100**. In general, geometrical center is center point of cross sectional geometry of an object. The geometrical center **113** is center of cross section of the optical waveguide cable **100**. The optical waveguide cable **100** includes a core region **117**. The core region **117** of the optical waveguide cable **100** is a central space surrounded by one or more covering layers of the optical waveguide cable **100**. The core region **117** enables the central space to house plurality of optical waveguides and one or more elements of the optical waveguide cable **100**. The optical waveguide cable **100** is a single mode optical waveguide cable. In an embodiment of the present disclosure, the optical waveguide cable **100** is a multimode optical waveguide cable. In general, the optical waveguide cable **100** is used for installation in ducts and micro ducts. In addition, the optical waveguide cable **100** is used for indoor and outdoor applications.

Further, the optical waveguide cable **100** includes one or more cylindrical enclosures **123**, a plurality of optical waveguides **133**, a gel **143**, a first layer **153** and a fluid absorbing element **163**. In addition, the optical waveguide cable **100** includes a jacket layer **173**, a plurality of robust components **183** and a plurality of ripcords **193 a-b**. The above combination of structural elements enables an improvement in a plurality of parameters of the optical waveguide cable **100**. The plurality of parameters includes attaining required breaking load, crush resistance, impact strength, torsion, transmission characteristics and the like.

The optical waveguide cable **100** includes the one or more cylindrical enclosures **123**. The one or more cylindrical enclosures **123** are positioned substantially along the longitudinal axis **107** of the optical waveguide cable **100**. The one or more cylindrical enclosures **123** extend along the entire length of the optical waveguide cable **100**. Each of the one or more cylindrical enclosures **123** is positioned in the core region **117** of the optical waveguide cable **100**. The one or more cylindrical enclosures **123** are positioned in core region **117** of the optical waveguide cable **100**. In an embodiment of the present disclosure, the one or more cylindrical enclosures **123** surround the plurality of optical waveguides **133** of optical wave guide cable **100**. The one or more cylindrical enclosures **123** are designed to provide a sound covering to light transmissions elements of the optical waveguide cable **100**. The optical transmission elements are randomly arranged inside the one or more cylindrical enclosures **123**.

In general, the one or more cylindrical enclosures **123** meet an optimal requirement of dimensions to facilitate free arrangement of the light transmission elements. The one or more cylindrical enclosures **123** provide primary protection to the optical elements. The one or more cylindrical enclosures **123** enable good resistance to compressive, tensile and twisting forces and maintain adequate flexibility over a wide range of temperatures. The one or more cylindrical enclosures **123** have low moisture sensitivity, good heat resistance, dimensional stability and chemical resistance. The one or more cylindrical enclosures **123** are made of material selected from a group. The group includes low smoke zero halogen and thermoplastic elastomer. In an embodiment of the present disclosure, the group includes any other suitable materials. In another embodiment of the present disclosure, the one or more cylindrical enclosures **123** are made of polymeric material. Each of the one or more cylindrical enclosures **123** is easily strippable. The one or more cylindrical enclosures **123** facilitate easy access to the light transmission elements.

In general, low smoke zero halogen emits limited smoke and no halogen when exposed to high sources of heat. Low smoke zero halogen is significant for use in networking applications that require low-smoke, low-toxicity and highly flame-retardant components. In general, thermoplastic elastomers are a class of copolymers or a physical mix of polymers that consist of materials with both thermoplastic and elastomeric properties. Thermoplastic elastomers show advantages of both rubbery materials and plastic materials. The benefit of using thermoplastic elastomers is the ability to stretch to moderate elongations and return to its near original shape creating a longer life and better physical range.

Each of the one or more cylindrical enclosures **123** is characterized by a first diameter and a second diameter. The first diameter of each of the one or more cylindrical enclosures **123** lies in a range of about 1.1 millimeter ±0.05 millimeter. In an embodiment of the present disclosure, the first diameter of each of the one or more cylindrical enclosures **123** lies in any other suitable range. The second diameter of each of the one or more cylindrical enclosures **123** lies in a range of about 1.3 millimeter ± 0.05 millimeter. In an embodiment of the present disclosure, the second diameter of each of the one or more cylindrical enclosures **123** lies in any other suitable range. The first diameter is the internal diameter of each of the one or more cylindrical enclosures **123**. The second diameter is the outer diameter of each of the one or more cylindrical enclosures **123**.

The optical waveguide cable **100** includes the plurality of optical waveguides **133**. The plurality of optical waveguides **133** is substantially present along the longitudinal axis **107** of the optical waveguide cable **100**. Each of the one or more cylindrical enclosures **123** includes a plurality of optical waveguides **133**. Each of the plurality of optical waveguides **133** is a light transmission element. The light transmission element is also referred to as optical waveguide. In general, each of the plurality of optical waveguides **133** is a light transmission element used for transmitting information as light pulses from one end to another. In addition, each of the plurality of optical waveguides **133** is a thin strand of glass capable of transmitting optical signals. Also, each of the plurality of optical waveguides **133** is configured to transmit large amounts of information over long distances with relatively low attenuation. Each of the plurality of optical waveguides **133** is configured to transmit large amount of information or data over long distance with high speed.

Further, each of the plurality of optical waveguides **133** includes a core region and a cladding region. The core region is an inner part of an optical waveguide and the cladding section is an outer part of the optical waveguide. Moreover, the core region is defined by a central longitudinal axis of each of the plurality of optical waveguides **133**. In addition, the cladding region surrounds the core region. Each of the plurality of optical waveguides **133** is made of silicon glass. In an embodiment of the present disclosure, each of the plurality of optical waveguides **133** is made of any other suitable material of the like. Each of the plurality of optical waveguides **133** is a single mode optical waveguide. In an embodiment of the present disclosure, each of the plurality of optical waveguides **133** is a multimode optical waveguide. The wavelength of light traveling through each of the plurality of optical waveguides **133** lies in a range of about 1285 nanometer to 1625 nanometer with cutoff wave length of 1260 nanometers. In an embodiment of the present disclosure, the wavelength of light traveling through each of the plurality of optical waveguides 133 lies in any other suitable range.

The optical waveguide cable **100** further includes the gel **143**. The gel **143** is contained inside the one or more cylindrical enclosures **123**. Each of the one or more cylindrical enclosures **123** encapsulates the plurality of optical waveguides **133** and the gel **143**. In an embodiment of the present disclosure, the one or more cylindrical enclosures **123** are dry cylindrical enclosure. The gel **143** protects the plurality of optical waveguides **133** from ingression of water and moisture inside the one or more cylindrical enclosures **123**. The gel **143** facilitates to enable mechanical support for optical wave guides **133** by providing cushion to prevent higher attenuations of optical wave guides **133**. The gel **143** facilitates to prevent water penetration through optical wave guide cable **100**. The gel **143** is a thixotropic gel. In an embodiment of the present disclosure, the gel **143** is any other suitable gel of the like. In yet another embodiment of the present disclosure the gel **143** is any suitable material of the like.

The optical waveguide cable **100** includes the first layer **153**. The first layer **153** surrounds the core region **117** of the optical waveguide cable **100**. The first layer **153** surrounds the one or more cylindrical enclosures **123**. The first layer **153** extends substantially along the entire length of the optical waveguide cable **100**. The first layer **153** surrounds the core region **117** along the entire length of the optical waveguide cable **100**. The first layer **153** is a fluid barring layer. The first layer **153** prevents the core region **117** of the optical waveguide cable **100** from ingress of fluids. The first layer **153** prevents water and other fluids from entering into the core region **117** of the optical waveguide cable **100**. The first layer **153** is characterized by a first thickness. The first thickness of the first layer **153** is about 0.15 ± 0.05 millimeter. In an embodiment of the present disclosure, the first layer **153** has any other suitable value of first thickness. The first thickness is the radial thickness of the first layer **153**. In an embodiment of the present disclosure, the first layer **153** is fluid inhibiting tape. In another embodiment of the present disclosure, the first layer **153** is a water inhibiting layer. In yet another embodiment of the present disclosure, the first layer **153** is of any other suitable material of the like.

The optical waveguide cable **100** further includes the fluid absorbing element **163**. The fluid absorbing element **163** is present around the one or more cylindrical enclosures **123** in the core region **117** of the optical waveguide cable **100**. The core region **117** of the optical waveguide cable **100** includes the one or more cylindrical enclosures **123** and the fluid absorbing element **163**. The first layer **153** surrounds the core region **117** of the optical waveguide cable **100**. The fluid absorbing element **163** is loosely distributed around the one or more cylindrical enclosures **123** in the core region **117** of the optical waveguide cable **100**. The fluid absorbing element **163** is characterized as a filler in the optical waveguide cable **100**. In general, filler is an object employed in optical cables to fill up vacant space between various elements present in core region of optical cables. The filler in optical waveguide cable **100** is circular in cross section. The filler facilitates to fill up vacant space in the core region **117** of the optical waveguide cable **100**. The fluid absorbing element **163** are water swellable yarns. In an embodiment of the present disclosure, the fluid absorbing element **163** are any other suitable material of the like.

The optical waveguide cable **100** further includes the jacket layer **173**. The jacket layer **173** is outermost layer of the optical waveguide cable **100**. The jacket layer **173** concentrically surrounds the first layer **153**. The jacket layer **173** is in continuous contact with the first layer **153** of the optical waveguide cable **100**. The jacket layer **173** extends substantially along the entire length of the optical waveguide cable **100**. The jacket layer **173** provides environment protection to the optical waveguide cable **100**. The jacket layer **173** is the outer envelope of the optical waveguide cable **100**. The jacket layer **173** wraps each of the plurality of elements of the optical waveguide cable **100**.

The jacket layer **173** is characterized by a second thickness. The second thickness of the jacket layer **173** lies in a range of about 1.4 millimeter ± 0.1 millimeter. In an embodiment of the present disclosure, the jacket layer **173** has any other suitable value of second thickness. The second thickness is the radial thickness of the jacket layer **173**. The jacket layer **173** is made of polyethylene. In general, polyethylene protects the optical waveguide cable **100** from harsh environment and harmful UV rays. In an embodiment of the present disclosure, the jacket layer **173** is made of any other suitable material of the like. In an embodiment of the present disclosure, the jacket layer **173** is of black color. In another embodiment of the present disclosure, the jacket layer **173** is of any other suitable color.

The optical waveguide cable **100** further includes the plurality of robust components **183**. In general, the purpose of robust component is to provide mechanical strength to the optical waveguide cable **100**. Each of the plurality of robust components **183** is embedded in the jacket layer **173**. The plurality of robust components **183** includes two bundles of robust components. In addition, each bundle of the two bundles of robust components includes three longitudinal robust components. The three longitudinal robust components are twisted together. Each of the three longitudinal robust components is a brass coated steel wire.. The three brass coated steel wires of each of the two bundles of robust components are twisted together. Each robust component of the plurality of robust components **183** is a brass coated steel wire. The coating of brass over the steel wire facilitates in the reduction of corrosion. In general, twisted together corresponds that the three longitudinal robust components of each of the two bundles of robust components are helically wrapped with one another. Each of the plurality of robust components **183** is coated with ethylene acrylic acid. The brass coated steel wire of each robust component of the plurality of robust components **183** is coated with ethylene acrylic acid. In an embodiment of the present disclosure, the brass coated steel wire of each robust component of the plurality of robust components **183** is coated with any other suitable material of the like.

Two bundles of the robust components are embedded 180° apart from one another. In an embodiment of the present disclosure, the plurality of robust components **183** is embedded in the jacket layer **173** in pairs of bundles. Each of the pair of bundle is embedded in the jacket layer **173** diametrically opposite to one another. In another embodiment of the present disclosure, a plurality of pair of bundles of robust components is embedded diametrically opposite to one another. In an embodiment of the present disclosure, the plurality of robust components **183** is embedded in the jacket layer **173** in any other suitable pattern of the like. The plurality of robust components and the jacket layer **173** elongates together. The plurality of robust components and the jacket layer **173** elongates together under vertical load as the optical waveguide cable **100** is hanged between two poles.

The coating of ethylene acrylic acid on brass coated steel wire of each of the plurality of robust components **183** is characterized by a third thickness. The third thickness of the coating of ethylene acrylic acid on brass coated steel wire lies in a range of about 20 microns to 30 microns. In an embodiment of the present disclosure, the third thickness of the coating of ethylene acrylic acid on brass coated steel wire lies in any other suitable range of the like. Each of the two bundles of robust components is characterized by a third diameter **D3**. The third diameter **D3** is the overall diameter of each bundle of the two bundles of robust components. The third diameter **D3** of each of the two bundles of robust components lies in a range of about 0.65 millimeter to 0.75 millimeter. In an embodiment of the present disclosure, the third diameter **D3** of each of the two bundles of robust components lies in any other suitable range.

In general, the brass coating facilitates to protect the steel wire from corrosion. Further, brass coating of steel wire provides required final tensile strength and break load with maintained third diameter **D3** as per application requirements. In general, a coating of ethylene acrylic acid improves a plurality of desirable properties of the brass coated steel wire. The ethylene acrylic acid coating provides necessary wire-to-rubber adhesion properties to steel wire. Further, ethylene acrylic coating improves the adhesion of brass plated steel wire to the jacket material. Combining properties of brass coating and ethylene acrylic coating, brass plated steel wire exhibit the plurality of properties includes water resistance, flexibility, crystallinity, chemical resistance and the like.

Further, the optical waveguide cable **100** includes the plurality of ripcords **193a-b**. Each of the plurality of ripcords **193a-b** is positioned substantially below the jacket layer 173. In general, ripcord is a parallel cord of strong yarn placed under outer jacket of the optical cable to facilitate in removal of outer jacket of the optical cable. The plurality of ripcords **193a-b** facilitates in removal of the jacket layer **173** of the optical waveguide cable **100**. The plurality of ripcords **193a-b** is positioned substantially below the jacket layer **173** to facilitate in removal of the jacket layer **173** of the optical waveguide cable **100**. The one or more ripcords lie substantially along the longitudinal axis **107** of the optical waveguide cable **100**. The plurality of ripcords **193a-b** facilitates stripping of the jacket layer **173**. Each of the plurality of ripcords **193a-b** enables easy access to the plurality of optical waveguides **133** in the optical waveguide cable **100**.

In an embodiment of the present disclosure, the plurality of ripcords **193a-b** is positioned diametrically opposite to each other. In another embodiment of the present disclosure, the plurality of ripcords **193a-b** is positioned in any other suitable pattern. In an embodiment of the present disclosure, the plurality of ripcords **193a-b** is made of polyester based twisted yarns. In another embodiment of the present disclosure, the plurality of ripcords **193a-b** is made of any other suitable material of the like.

The optical waveguide cable **100** includes two equally spaced axial stripes **177a-b** over a circumference of the jacket layer **173**. In general, an axial stripe is a colored marking over the outermost layer of optical cable for the purpose of identification, differentiation and the like. Each of the two equally spaced axial stripes **177a-b** extends along the entire length of the optical waveguide cable **100**. Each of the two equally spaced axial stripes **177a-b** extends in the direction of the longitudinal axis **107**. Each of the two equally spaced axial stripes **177a-b** is 1.25±0.25 millimeters wide. In an embodiment of the present disclosure, the two equally spaced axial stripes **177a-b** have any other suitable width of the like. Each of the two equally spaced axial stripes **177a-b** is positioned at 90° to the plurality of robust components **183**. In an embodiment of the present disclosure, the two equally spaced axial stripes **177a-b** are positioned in any other suitable pattern of the like.

The optical waveguide cable **100** is characterized by a breaking load. The breaking load of the optical waveguide cable **100** lies in a range of about 1350 to 1800 Newton. In an embodiment of the present disclosure, the breaking load of the optical waveguide cable **100** lies in any other suitable range of the like. In general, the breaking load of cable is the minimum load at which the cable will break when the ends of the cable are prevented from rotational and other external forces generated at clamped portion of aerial installation. The optical waveguide cable **100** is characterized by a fourth diameter. The fourth diameter of the optical waveguide cable **100** lies in a range of about 7.0 millimeter ± 0.1 millimeter. In an embodiment of the present disclosure, the fourth diameter of the optical waveguide cable **100** lies in any other suitable range of the like. The fourth diameter is the external diameter of the optical waveguide cable **100**.

In addition, the optical waveguide cable **100** is characterized by a cable weight. The cable weight of the optical waveguide cable **100** lies in a range of about 38 ± 10% kilogram per kilometer. In an embodiment of the present disclosure, the cable weight of the optical waveguide cable **100** lies in any other suitable range. The cable weight refers to the nominal weight of the optical waveguide cable **100**. The optical waveguide cable **100** is characterized by a cable bend radius. The cable bend radius of the optical waveguide cable **100** is 12D. The cable bend radius of the optical waveguide cable **100** is about 84 millimeter (about 12 times the diameter of cable). In an embodiment of the present disclosure, the cable bend radius of the optical waveguide cable **100** has any other suitable value of the like. In general, the bend radius is the smallest allowed radius the cable is allowed to be bend around with in which change in attenuation will be with required standard limits. During installation, optical cables are bent or flexed in various environmental conditions. Optical cables are often bent around a curve in conduits or underground ducts.

The optical waveguide cable **100** is characterized by a crush resistance. The crush resistance of the optical waveguide cable **100** is about 2000 Newton per 10000 square millimeters. In an embodiment of the present disclosure, the optical waveguide cable **100** has any other suitable value of crush resistance. In general, crush resistance is the ability of an optical cable to withstand and/or recover from the effects of a compressive force. Further, the optical waveguide cable **100** is characterized by impact strength. The impact strength of the optical waveguide cable **100** is about 10 Newton meters. In an embodiment of the present disclosure, the optical waveguide cable **100** has any other suitable value of impact strength. In general, impact strength is the ability of a material to absorb shock and impact energy without damaging cable components and maintaining standard limits of attenuation changes.

Further, the optical waveguide cable **100** is characterized by certain torsion angle and load. The torsion angle of the optical waveguide cable **100** is about ±180°. In an embodiment of the present disclosure, the optical waveguide cable **100** has any other suitable value of torsion angle. In general, torsion is the twisting of optical cable with certain an applied torque for certain angle within which the change in attenuation will be in required standard limits. The optical waveguide cable **100** is characterized by a waveguide strain. The waveguide strain at stringing tension of optical waveguide cable **100** is at most 0.050%. The waveguide strain at stringing tension of optical waveguide cable **100** subjected to maximum environmental load is at most 0.667%. The waveguide strain at stringing tension of optical waveguide cable **100** after unloading is at most 0.050%. In general, stringing tension corresponds to tension induced in optical cable due to tensile load applied at both ends of optical cable. The span length of optical waveguide cable **100** is about 55 meters to 68 meters at optical waveguide cable **100** sag of at most 1.8%. In general, span length of a cable refers to length of span of the cable. In general, cable sag corresponds to a small displacement of optical cable from mean position under action of one or more forces.

The optical waveguide cable **100** has tensile test results as per standards of IEC-60794-1-21-El. The tensile test is performed with a load of 150 Newton. The waveguide strain at maximum loading is less than 0.7% strain. The optical waveguide cable **100** has crush resistance test results as per standards of IEC-60794-1-21-E3. The crush resistance test is performed with a load of 2000 Newton at time interval of 10 minutes at 3 positions in optical waveguide cable **100** 250 mm apart from each other. The optical waveguide cable **100** has impact strength test results as per standards of IEC-60794-1-21-E4. The impact strength is performed with a impacting surface of radius 12.5 millimeter, with torque of 10 newton meter at 3 positions in optical waveguide cable **100** 100 mm apart from each other. The optical waveguide cable **100** has torsion test results as per standards of IEC-60794-1-21-E7. The torsion test of the optical waveguide cable **100** is performed with a load of 100 Newton, with torsion angle of ± 360° for 5 cycles. The optical waveguide cable **100** has environmental performance test results as per standards of IEC-60794-1-22-F1. The environmental performance test is done with sample length of at least 1000 meter. The environmental performance test is done at -20°C for 4 hours. The environmental performance test is done at 60°C for 4 hours. The environmental performance test is done at 85°C for 4 hours. The environmental performance test is done at 85°C for 168 hours. The optical waveguide cable **100** has cable bend test results as per standards of IEC-60794-1-21-E11. The bend test of optical waveguide cable 100 is performed with a bend radius of 12D for 3 turns and for 5 cycles. The optical waveguide cable **100** has water penetration test results as per standards of IEC-60794-1-22-F5. The water penetration test is performed with a 3 meter sample of the optical waveguide cable **100** immersed under head of 1 meter in water for 3 hours.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical waveguide cable (100) comprising a jacket layer (173); and
a plurality of robust components (183) embedded in the jacket layer (173), wherein the plurality of robust components (183) are brass coated steel wires, wherein the plurality of robust components (183) and the jacket layer (173) elongate simultaneously along the length of the optical waveguide cable (100) on application of force until the optical waveguide cable (100) reaches to a predefined breaking load.

2. The optical waveguide cable (100) as claimed in claim 1, wherein the breaking load is in a range of about 1350 Newton to about 1800 Newton;
wherein the optical waveguide cable (100) has a cable bend radius, wherein a minimum cable bend radius is about 12D;
wherein the optical waveguide cable (100) has a crush resistance of about 2000 Newton per 10000 square millimetres;
wherein the optical waveguide cable has an impact strength of about 10 Newton meters; and wherein the optical waveguide cable has a torsion angle of about ± 180°.

3. The optical waveguide cable (100) as claimed in claim 1 or 2, wherein the optical waveguide cable (100) has a span length in a range of about 55 meters to about 68 meters at sag of at most 1.8%.

4. The optical waveguide cable (100) as claimed in any preceding claim, wherein the plurality of robust components (183) comprising two bundles of robust components, wherein each bundle of the two bundles comprising three longitudinal robust components or three stranded robust components, wherein the three longitudinal robust components are twisted together.

5. The optical waveguide cable (100) as claimed in any preceding claim, wherein the plurality of robust components (183) and the jacket layer (173) elongate under vertical load as the optical waveguide cable (100) is hanged between two poles.

6. The optical waveguide cable (100) as claimed in any preceding claim, wherein the plurality of robust components (183) comprises two bundles of robust components, each of the two bundles of robust components having a third diameter, wherein the third diameter lies in a range of about 0.65 millimeter to 0.75 millimeter, wherein the third diameter is an overall diameter of each bundle of the two bundles of robust components.

7. The optical waveguide cable (100) as claimed in any preceding claim, wherein the optical waveguide cable (100) comprises one or more cylindrical enclosures, wherein the one or more cylindrical enclosures (123) are made of a material selected from a group consisting of low smoke zero halogen and thermoplastic elastomer; and
wherein the one or more cylindrical enclosures (123) are filled with a gel (143) or are dry.

8. The optical waveguide cable (100) as claimed in any one of claims 1 to 6, further comprising one or more cylindrical enclosures (123) positioned substantially along a longitudinal axis (107) of the optical waveguide cable (100), each of the one or more cylindrical enclosures (123) is positioned in a core region (117) of the optical waveguide cable (100), each of the one or more cylindrical enclosures (123) comprising of a plurality of optical waveguides (133), wherein the one or more cylindrical enclosures (123) have a first diameter in a range of about 1.1 millimeters + 0.05 millimeters and a second diameter in a range of about 1.3 millimeters + 0.05 millimeters.

9. The optical waveguide cable (100) as claimed in claim 8, further comprising:
a fluid absorbing element (163) positioned around the one or more cylindrical enclosures (123), the fluid absorbing element (163) is positioned in the core region (117) of the optical waveguide cable (100), wherein the fluid absorbing element (163) is a filler; and
a first layer (153) surrounding a core region (117) of the optical waveguide cable (100), the first layer (153) is a fluid barring layer and has a first thickness in a range of about 0.15 millimeters ± 0.05 millimeters;
wherein the jacket layer (173) concentrically surrounds the first layer (153) so that the jacket layer (173) is in continuous contact with the first layer (153); and
wherein the jacket layer (173) has a second thickness in a range of about 1.4 millimeters + 0.1 millimeters.

10. The optical waveguide cable (100) as claimed in any preceding claim, wherein the optical waveguide cable (100) has a fourth diameter in a range of about 7.0 ± 0.1 millimeters.

11. The optical waveguide cable (100) as claimed in any preceding claim, wherein the optical waveguide cable (100) has a cable weight in a range of about 38 + 10% kilogram per kilometers.

12. The optical waveguide cable (100) as claimed in any preceding claim, wherein the optical waveguide cable (100) has a waveguide strain at stringing tension of at most 0.050%, wherein the waveguide strain at stringing tension of the optical waveguide cable (100) is subjected to maximum environmental load is at most 0.667%; and
wherein the optical waveguide cable (100) has a waveguide strain at stringing tension after unloading of at most 0.050%.

13. The optical waveguide cable (100) as claimed in any preceding claim, wherein the optical waveguide cable (100) comprises two equally spaced axial stripes over a circumference of the jacket layer (173), wherein each of the two equally spaced axial stripes is 1.25 ± 0.25 millimeters wide and positioned at 90° to the plurality of robust components (183).

14. The optical waveguide cable (100) as claimed in any preceding claim, wherein the optical waveguide cable (100) has an elastic limit of at least 1200 Newton.

15. The optical waveguide cable (100) as claimed in any preceding claim, further comprises a plurality of ripcords (193a 193-b) positioned substantially below the jacket layer (173).
